# EUROPEAN PATENT SPECIFICATION

(11) **EP 3 172 954 B1**
(45) Date of publication and mention of the grant of the patent: **29.08.2018**
(21) Application number: 15196982.1
(22) Date of filing: 30.11.2015
(51) Int. Cl.: A01C 1/02, G01N 35/00

(54) **A SYSTEM FOR AUTOMATIC SCARIFICATION AND ASSESSMENT OF VITALITY OF SEEDS AND A METHOD FOR AUTOMATIC SCARIFICATION AND ASSESSMENT OF VITALITY OF SEEDS**
SYSTEM ZUR AUTOMATISCHEN RITZUNG UND BEWERTUNG DER VITALITÄT VON SAMEN UND VERFAHREN ZUR AUTOMATISCHEN RITZUNG UND BEWERTUNG DER VITALITÄT VON SAMEN
SYSTÈME DE SCARIFICATION AUTOMATIQUE ET D'ÉVALUATION DE LA VITALITÉ DE SEMENCES ET SCARIFICATION AUTOMATIQUE ET PROCÉDÉ D'ÉVALUATION DE LA VITALITÉ DE SEMENCES

(30) Priority: 29.11.2015 PL 41496915
(43) Date of publication of application: 31.05.2017
(73) Proprietor: Akademia Gorniczo-Hutnicza im. Stanislawa Staszica w Krakowie, 30-059 Krakow (PL); Uniwersytet Rolniczy im. Hugona Kollataja w Krakowie, 31-120 Krakow (PL); Przemyslowy Instytut Maszyn Rolniczych, 60-963 Poznan (PL)
(72) Inventor: Tadeusiewicz, Ryszard, 31-261 Krakow (PL); Jablonski, Miroslaw, 33-326 Mogilno (PL); Mikrut, Zbigniew, 30-441 Krakow (PL); Przybylo, Jaromir, 32-050 Skawina (PL); Pilat, Adam, 31-234 Krakow (PL); Turnau, Andrzej, 30-095 Krakow (PL); Klocek, Jakub, 31-223 Krakow (PL); Walczyk, Jozef, 31-443 Krakow (PL); Tylek, Pawel, 31-651 Krakow (PL); Juliszewski, Tadeusz, 30-334 Krakow (PL); Kielbasa, Pawel, 33-333 Ptaszkowa (PL); Szczepaniak, Jan, 61-227 Poznan (PL); Adamczyk, Florian, 60-159 Poznan (PL); Frackowiak, Pawel, 61-341 Poznan (PL); Wachalski, Grzegorz, 61-289 Poznan (PL)
(74) Representative: Kancelaria Eupatent.pl Sp. z.o.o

(56) References cited:
- WO-A1-2011/089102
- US-A1- 2008 317 279
- US-A1- 2013 176 553

## Description

The present invention relates to a system for automatic scarification and assessment of viability of seeds and a method for automatic scarification and assessment of viability of seeds, in particular of oak seeds.

Harvesting, storing, and subsequent preparing for sowing of seeds may cause development of bacteria or fungus, which cause damage to cotyledons and/or an embryo. Consequently, ongoing mummification changes cause weakening or decay of viability functions of the seed. As a result, the seed is not able to germinate or the process of germination is slowed down.

One example of such phenomena is related to mummification changes of oak seeds. Analysis of decades of data related to harvesting of acorns show that an abundant crop of the acorns occurs in Poland usually every 5-7 years, whereas good harvesting years sometimes happened more frequently (once every 3 years), or less frequently (once every 9 years). In a mild climate, such as in western Europe, harvesting years tend to happen more frequently, that is every 2-5 years. Both in Poland and in the rest of Europe, artificial regeneration of a pedunculate oak is practiced, by means of seedlings grown in nurseries; natural regeneration is only limited to some regions and only during the years of the richest harvest. Direct sowing of the acorns is also rarely practiced. The main source of the seeds are commercial oak seed stands. During the abundant periods, the demand for the seeds is about 1 000 000kg, which causes a significant logistic problem in preparation of such a big amount of seed material. The seeds of the pedunculate oak fall into the "recalcitrant" category, therefore in order to preserve their viability, they require constant preservation of their natural moisture, and thus they cannot be frozen for long-term storage. Due to a quick decline of acorns viability, their storage is practically limited to 2-3 years. The worse the quality of the seeds at the beginning of the storage, the faster the seeds age. Thereby, their separation is an important issue. The purpose of separation is to clean the seeds and to separate the fully and properly developed seeds from the empty or damaged seeds. Selection starts by harvesting acorns of a specified size. Nursery of seedlings favors the seedlings which grow faster. The slow-growing seedlings fall in competition with the others or are eliminated during the sorting of the seedlings. Current technologies and techniques of nursery production require seeds of a very high quality, so that it is possible to grow a seedling of specified morphological parameters from each seed. Point seeders (precision seeders) are used when there is a need of using seed material characterized by high purity and viability, low variance of physical features and high flowability. The highest ability to germination is expected from the seeds intended to be sown under controlled conditions, especially in container nurseries, where only a single seed should be sown to one cell of the tray. This is forced by the economic factors of seedling production, especially of the seedlings vaccinated with mycorrhizal bio-preparations. The increase of sowing efficiency is particularly important in case of oak, because it is characterized by very irregular germination. The first seedlings begin to appear after 2-3 weeks after sowing, while the last ones even after 16-17 weeks. This causes uneven growth of the seedlings and intensifies the competition between the seedlings. The seedlings which appear later are covered by the larger seedlings with well-developed leaves, which significantly limits their access to light and water. The irregularity of germination, and the subsequent growth cause a decrease in the sowing efficiency. However, the criterion of the ability of germination (efficiency) alone does not guarantee to obtain seedlings having desired morphological parameters. The mass of the seeds has a great influence on the growth of seedlings in the juvenile phase. The seedlings which have grown from heavier seeds are characterized by a larger ratio of the length of roots to the length of a sprout, which suggests their higher growing quality. The relation between the size of the seeds and the distribution of the biomass is particularly visible in case of pedunculate oak seedlings. However, it should be noted that trees growing in the same stand may produce seeds which vary significantly in terms of mass and size. The seeds from old trees are often smaller than the seeds from young trees, which enter into the phase of the seed yielding. Big and heavy seeds, as well as small and light seeds, should be equally important due to the necessity of protecting and preserving the genetic diversity. The successive elimination of the small seeds, commonly performed when using classical methods of seed separation, leads to elimination of the seeds coming from the old trees, which are most probable to be indigenous, i.e. best adapted to particular habitat conditions. To sum up the above, it can be stated that selecting seeds solely on the basis of the criterion of size is disadvantageous, whereas determining which of the oak seeds are damaged and incapable of proper germination and growth is highly advisable. Eliminating seeds that are damaged (due to i.a. mummification changes) is highly advisable, because their sowing causes losses resulting from unnecessary costs of the sowing and further losses in the nursery. There are therefore important reasons to aim for a most efficient, objective and fully automated assessment of the mummification changes of the seeds, which would allow spoiled seeds to be eliminated before the process of sowing and which would allow costs reduction and increase of efficiency of the seedlings production.

There are known methods for mechanical separation of acorns, which utilize classical separation features, such as density, aerodynamic properties, size and shape, friction properties, or elasticity. However, separation based on these features does not result in desired effects. On the other hand, acceleration and equalization of germination is possible by arduous mechanical scarification of the seeds, which until now has been performed manually, generally by use of secateurs, after which an operator performs visual assessment of the viability of the seeds. A less frequently used method involves cutting off a portion of the seed mechanically with a grinder adapted for this purpose. This method is used in Poland to prepare for sowing tens of millions of seeds per year, in the period of 3 months (from January till March). Over a dozen of operators need to be employed in every nursery that produces the seedlings to perform this arduous and monotonous work. The ergonomic burden of this work is related to repetitive, several thousands of times per day, cycles of movements of arms and hands including: collecting a seed (or a plurality of seeds) from a container to operator's palm, cutting off a portion of the seed with secateurs, assessing visually whether the seed is suitable to germinate (on the basis of the color of the cotyledons and the degree by which the seed coat is filled with the cotyledons), transferring the seed into a sowing container or rejecting the seed. Such burden is hardly acceptable. Even when the operators use modern secateurs, their neuromuscular system of hands and arms becomes tired and the operators become weary by the repetitive, monotonous and uninteresting work.

As mentioned earlier, the manual method of assessment of viability of the seeds requires many people to perform arduous work in order to achieve satisfactory efficiency of the nursery. Moreover, in this method the assessment of the mummification changes is subject to human factor. Despite appropriate training, the work efficiency of people who make the assessments does not guarantee a fully correct detection and classification of the seeds. As a result of incorrect classification, shortage of seedlings occurs in a container nursery.

A US patent application US 2013/176553 A1 discloses a method and apparatus for non-destructive testing of a seed. The method comprises vibrating the seed to orient the seed on an axis, identifying a location of a known feature of the seed, determining a sample location on the seed based on the location of the known feature, and performing a non-destructive testing procedure on the seed proximate the sample location.

A PCT application WO 2011/089102 A1 discloses a method for evaluating germination properties of plant seeds and/or of sprouts developed from the plant seeds, on the basis of anatomical characteristics (x, y) at a particular point in time, wherein determining the anatomical characteristics (x, y) at a particular point in time comprises analyzing the plant seeds and/or sprouts using at least one imaging method and obtaining three-dimensional analysis data at a particular point in time, segmenting the analysis data at a particular point in time and associating segments thus obtained into anatomical units of the plant seeds and/or sprouts, and determining the anatomical characteristics (x, y) of the anatomical units of the plant seeds and/or sprouts at a particular point in time from the associated segments at at least one point in time.

A US patent application US 2008/317279 A1 discloses an automated seed sampling and sorting system. The system includes an imaging station for collecting image data of a set of seeds and a seed orientation station for independently positioning each seed in the set in a desired orientation based on the collected image data.

Therefore, the purpose of the invention is to develop a method and a system aiming to automate the scarification process and the assessment of viability of seeds by allowing detection of mummification changes and simultaneous sorting of the seeds to fractions.

The object of the invention is a system and method for automatic scarification and assessment of viability of oak seeds according to the attached set of claims..

The object of the invention is shown by means of example embodiments in a drawing, in which:
Fig. 1 shows a general schematic of a system,
Fig. 2 shows a length and orientation detector,
Fig. 3 shows an example of a seed,
Figs. 4a-4b show examples of types of seeds,
Fig. 5 shows a flow diagram of operation of the length and orientation detector,
Fig. 6 shows an orienter,
Figs. 7a-7b show the orienter with a seed in a first orientation,
Figs. 8a-8b show the orienter with a seed in a second orientation,
Fig. 9 shows components of a processing system for processing signals and images,
Figs. 10a-10b show examples of seed positioners,
Figs. 11a-11b show two embodiments of scarifier blades,
Fig. 12 shows a viability detector,
Fig. 13 shows a schematic of operation of the detector,
Figs. 14a-14d show examples of seeds with different degree of mummification changes,
Fig. 15 shows steps of the method according to the invention.

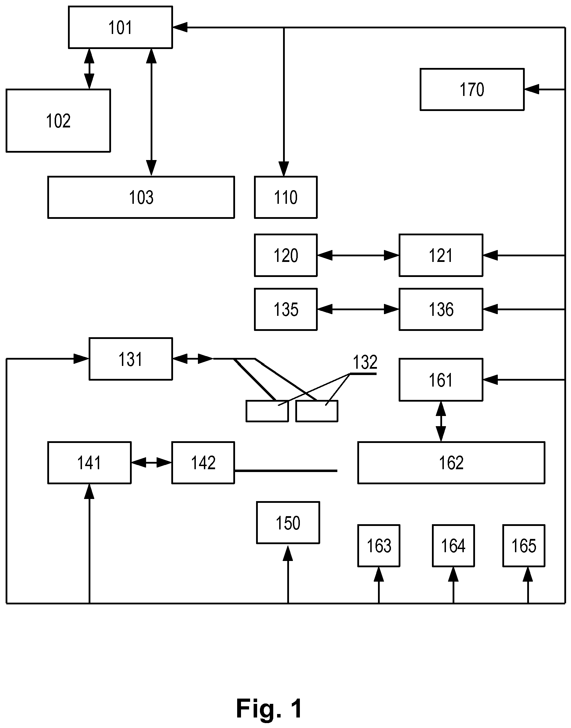

Fig. 1 shows a general schematic of a system. The system comprises components which may operate sequentially or in parallel. The system comprises a seed feeder, a length and orientation detector 110, a rotator 120, a gripping unit, a scarifier 142, a mummification changes detector 150, a sorter and a controller 170.

The components are connected to each other and to the controller 170 to enable data exchange. Preferably, controllers of the individual components of the systems may communicate with each other and exchange data. The individual components may have embedded controllers, or may be controlled by a main controller, or may have individual controllers 101, 121, 131, 136, 141, 161 coupled with the main controller 170 (in Fig. 1 the control lines for controlling the individual components are shown as arrows).

The path flow of the seed through the system is the following. The seed 1 is passed from an input container 102 to a feeder 103. The feeder 103 transports the seed to a length and orientation detector 110. Next, the seed 1 is passed to a rotator 120, from which it is transported to a positioner 135, where it is positioned, and to a gripping unit having a gripper 132 that clamps the seed 1. Next the clamped seed is scarified in a scarifier 142 and then it is transferred to a mummification changes detector 150, and thereafter, as a result of the classification, it is transferred from a sorter to a particular container 163, 164 or 165.

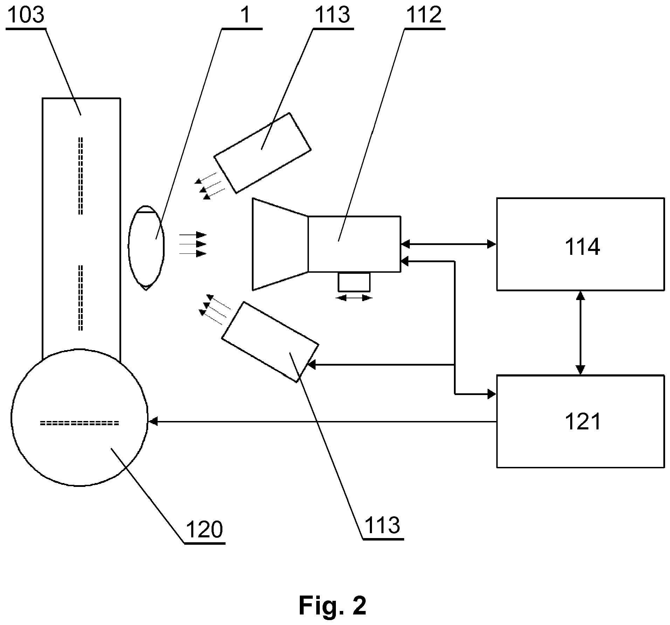

Fig. 2 shows the length and orientation detector 110. The length and orientation detector 110 is a measurement system equipped a vision module that handles a method of identification and orientation of the seed. The detector 110 sends information concerning the orientation of the seed to the controller 170.

The length and orientation detector has a vision camera 112 (digital or analog) that acquires a monochrome or a color image in a visual spectrum or in an extended spectrum. The length and orientation detector 110 may be equipped with one or more illuminators 113, i.e. sources of light, operating continuously or being pulse controlled synchronously with the camera. Preferably, the illuminators 113 are placed around the optical axis of the camera 112, providing a uniform illumination of the field of view. The signal from the camera 112, equipped with a lens and an analog or a digital transmission interface, is sent to a processing system 114. The optical system of the lens of the camera 112 allows a reliable representation of the seed and the elements in which it is located. The optical system of the lens may be equipped with adjustable elements allowing adjustment or setting of brightness and focus of the image, as well as its magnification. In addition, the mechanical mounting of the system of the camera 112 with the lens, allows adjusting their distance from the acorn placed at the outlet of the feeder 103. This is done by the operator while installing and calibrating the device.

The processing system 114 comprises an acquisition interface for acquiring the camera vision signal and converting it into a digital form (if the signal is transmitted in an analog form). Further image processing, with use of contextual and non-contextual methods, with use of digital configurable or programmable computing elements, is performed on the sampled and digitalized vision signal consisting of one or more lines, according to the configuration of the camera vision sensor. The camera image can be acquired in a free mode or may be triggered by a system with additional sensors or by a controller informing about the presence or movement of the seed at the outlet of the feeder 103, in the rotator 120 or in-between them. The result of operation of the signal processing system 114, which processes the signal acquired from the camera 112, is information indicating the length of the seed 1 and its orientation, or an error code, indicating that the length and/or orientation cannot be determined. The error code is a useful information, that is necessary in particular for appropriate operation of the controller and the system. Therefore, during continuous operation, human intervention is required only for critical errors or faults. Information about errors, critical errors and faults may be stored in a form of records on a digital storage in form of a non-volatile memory of the controller 170 or/and a memory of the processing system 114.

Information about the orientation of the seed 1 may take one of three values, that indicate: that the distal portion 1a is oriented in the direction of the outlet of the transporting channel, that the distal portion 1a is oriented in the direction of the inlet of the transporting channel, or that it is not possible to determine the orientation of the seed 1.

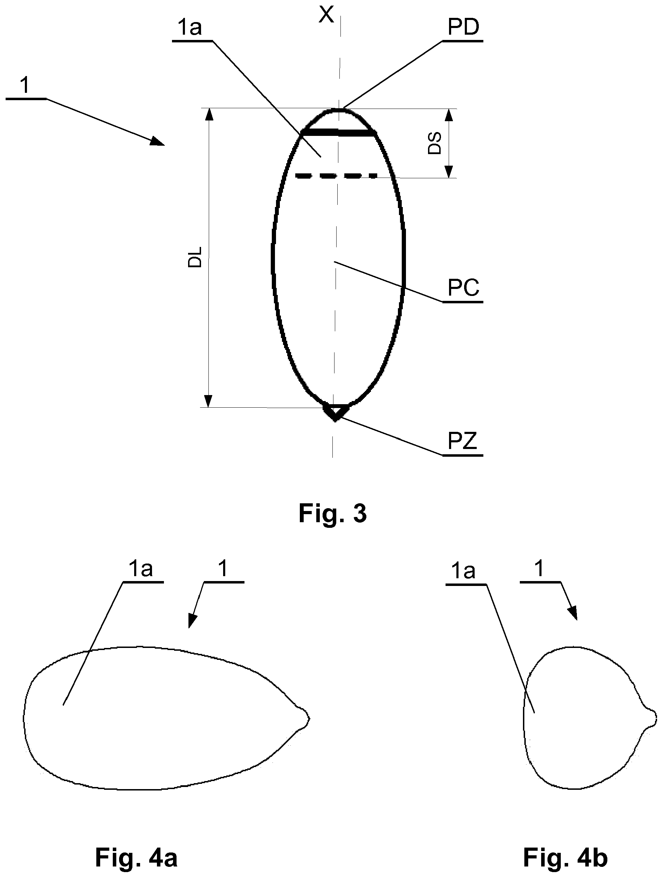

Fig. 3 shows an example of a seed. The distal portion 1a may be indicated, for example, descriptively as the portion located along the approximate rotational axis of symmetry X of the seed 1, on which points PZ and PD are located. Point PZ indicates an embryo of the seed, while point PD indicates a point located on the opposite side of the seed. The distal portion 1a of the seed 1 contains point PD. Cutting off the distal portion 1a during scarification does not negatively influence (in a significant way) the viability of the seed. The distal portion is cut off at the distance DS from point PD (along the scarification plane which is preferably perpendicularly to the X axis).

Figs. 4a-4b show examples of seed types. A type-A seed is characterized by a significantly higher ratio of length to thickness (1 or more). A type-B seed is a seed having the length that is comparable to its diameter. In case of the type-B seeds, the gripper requires a larger clamping force due to a smaller area of contact on the seed-gripper line.

The controller 121 of the rotator 120, based on information received from the length and orientation detector 110, controls the rotator 120 such as to feed the seed 1 to the positioner, to the gripper, and further to the scarifier 142 (with a corresponding controller 141), with the distal portion 1a of the seed oriented outwardly from the gripper 132, in order to perform the scarification and visual assessment of the quality of the seed on the basis of the cross-sectional image. In other words, the distal portion 1a always protrudes from the gripper 132 to such extent as to enable scarification by the scarifier 142.

A seed 1, whose length and orientation has not been determined by the length and orientation detector 110, is directed to a container 165 for unrecognized seeds.

The controller 136 of the positioner 135 (or the main controller 170), on the basis of the length of the seed determined by the length and orientation detector 110, controls the positioner 135 of the seed so that the scarification is performed at a particular distance from the distal portion 1a.

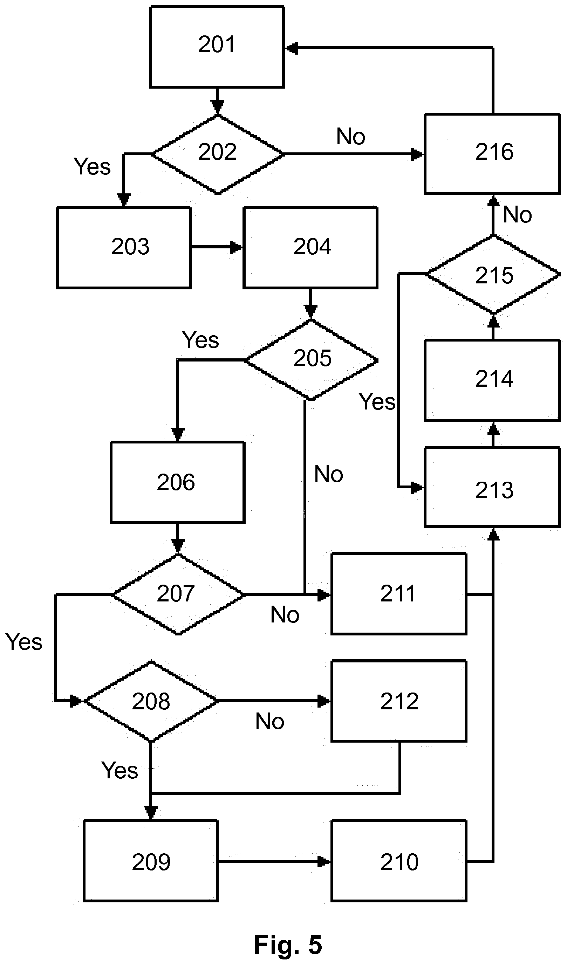

Fig. 5 shows a schematic of operation of the length and orientation detector 110. As a result of the operation of this detector, the length DL and the orientation defined as CORRECT or INCORRECT are obtained. In case of oak seeds, based on the value of DL, the distance DS is determined, from the outermost point of the distal portion 1a in the direction of the embryo, along the approximate axis of symmetry X of the seed, as shown in Fig. 3. In this way, the plane of scarification, along which the scarifier blades 142 of the scarifier are supposed to move, is determined. The plane of scarification is preferably perpendicular to the approximate axis of the rotational symmetry X of the seed.

The orientation of the seeds is determined on the basis of an image or a sequence of images acquired from the camera 112, which observes the operating area on which the seeds appear. For this purpose, the morphological features and shape of the seed are used, based on which the computer model of the seed is created. Next, this model is used for searching for specific points on the image, allowing detection and determination of the orientation of the seed, wherein two alternative methods are used for orientation detection, which are activated depending on the quality of the image and the properties of the imaged seeds. It results from the fact, that depending on the species and morphology, different ratios of the length and width of the oak seeds are observed.

For type-A acorns (see Fig. 4a), the length of the acorn DL is determined by indicating the furthermost points (e.g. corresponding to points PZ, PD) on the image depicted by the camera that belong to the acorn image, along its axis of symmetry. This method is applicable for seeds having their length larger than the diameter.

For type-B acorns (see Fig. 4b), having a diameter that is larger or close to the length, the length is assumed to be the distance between the points on the contour of the seed, which form a straight line close to the axis of symmetry of the seed 1, and are at the furthest distance from each other. The indication of the orientation as CORRECT follows by determination of mutual spatial distribution of the determined points PZ, PC and PD, wherein point PC indicates the center of the acorn - namely the half of the distance PZ-PD. If the distribution of points PZ and PC corresponds to the desired direction shown in Fig. 3, then a message K_ROTATE is not output to the controller 121 of the rotator 120. Otherwise, such a message is sent to the controller 121 of the rotator 120, through the processing system 114.

Fig. 5 shows examples of commands of the length and orientation detector. In the first step 201, an image from the camera is acquired. Next, the presence of the seed is checked in step 202. If the seed is present, the seed region is determined in step 203 and the seed length is determined in step 204. If not, a message K_TAKE is output in step 216. After the determination of the region and the length of the seed, it is checked in step 205 if the length has been determined. If not, a message K_ERROR is output in step 211. If yes, the orientation of the seed is determined in step 206 and it is checked in step 207 if the orientation has been determined. If the orientation has not been determined, the message K_ERROR is output in step 211. If the orientation has been determined, the correctness of the orientation is checked in step 208. In case the orientation is not correct, a message K_ROTATE is output in step 212. If the orientation is correct, data is stored in step 209 and a message K_LENGTH including the length of the seed is output in step 210. Next, both after step 210 as well as after step 211, a message K_REMOVE is output in step 213. Next, the image from the camera is acquired in step 214 and checked in step 215 for the presence of the seed. If the seed is not present in the image, the process returns to step 213. If the seed is present, the process continues to step 216 wherein a message K_TAKE is output, and the process returns to step 201.

The morphology and the state of the processed oak seeds may cause that it is difficult or impossible to directly localize point PZ on the image of seed. Then, point PZ is determined indirectly, for example by analyzing the contour of the seed separated from the structural element of the feeder. The indirect method exploits the fact that the curvature of profiles of seeds of particular species of oaks is different in the region of points PZ and PD, thereby on this basis one of the most remote points is referred to as PZ, and the other as PD.

The scarification distance DS may be determined with respect to the total length DL of the seed or as an absolute value. The structure of the length and the orientation detector 110 also allows to apply a function based on the length of seed or on an absolute value of the cutting off, set by an operator of the system during its operation, during initialization of the system, or defined during automatic or manual (performed by the operator) calibration.

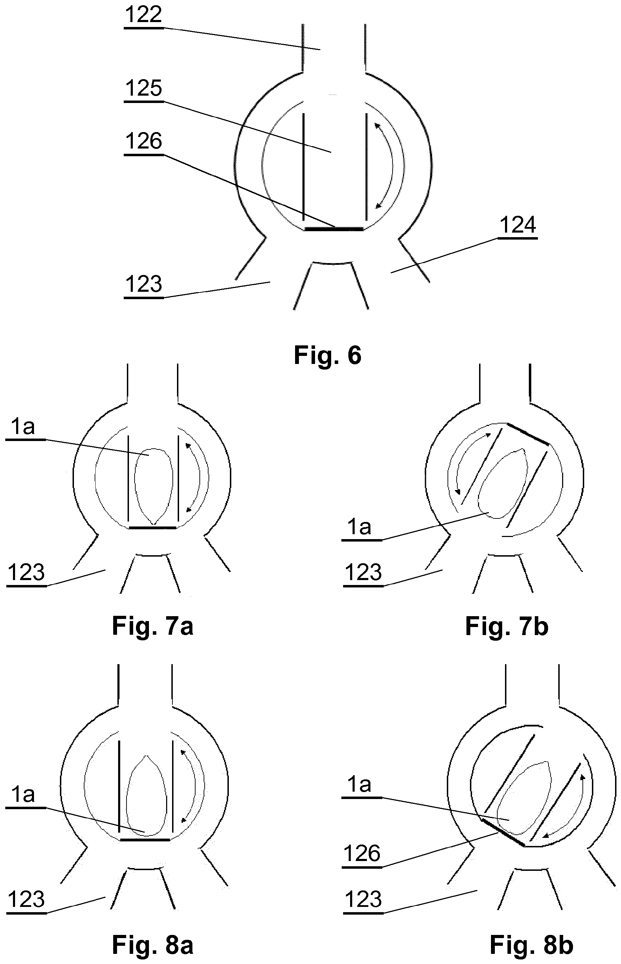

Fig. 6 shows the rotator 120. The rotator 120 is configured to automatically orient the seeds. It comprises an inlet channel 122, a seed presence sensor, a rotation mechanism 125, a partition 126 and outlet channels 123, 124. The rotation mechanism 125 may have a form of a rotary bed that allows, if necessary, to change the orientation of the seed by a particular angle. This bed is equipped with a movable bar - the partition 126.

On the basis of information received from the length and orientation detector 110, after the presence of the seed in the rotary bed 125 is confirmed, the seed is rotated by a particular angle and oriented such as to be directed with its distal portion towards the outlet 123. In case of a seed of undetermined features, the seed is directed towards the opening 124 - in this case the orientation of the seed is irrelevant. Figs. 7a-7b show the orienter with the seed 1 provided in an incorrect orientation. Figs. 8a-8b show the orienter with the seed 1 provided in a correct orientation. After the angular position is set by the rotation mechanism 125, the partition 126 is hidden/opened (for an appropriately oriented seed), therefore the seed 1 is released and moved to a particular outlet. The seeds that are not oriented correctly do not need the partition 126 to be opened, because the rotation of the rotation mechanism 125 sets appropriate orientation of the seed 1.

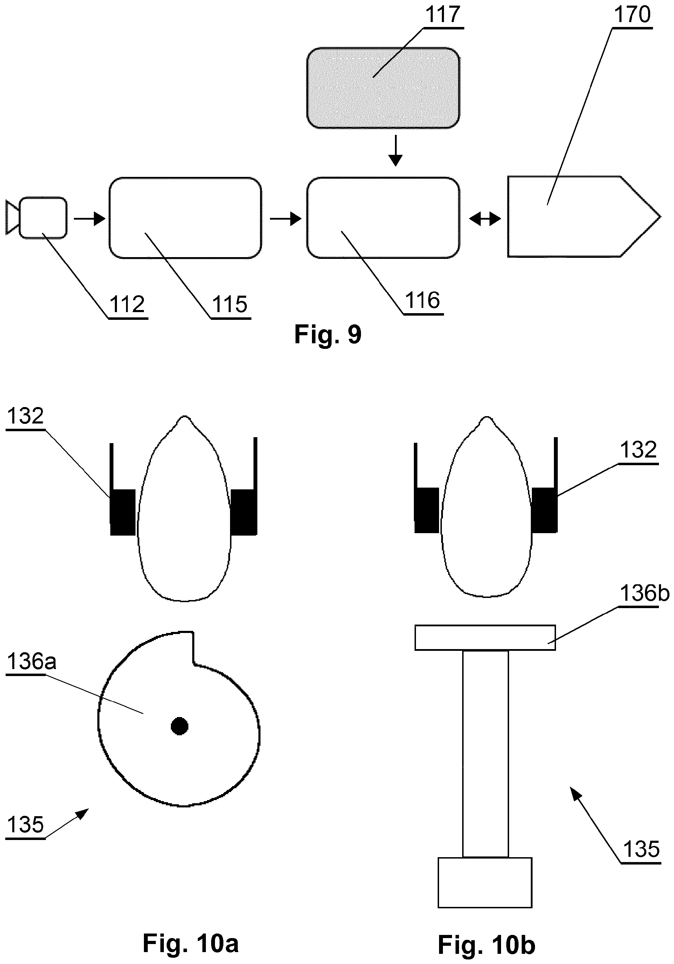

Fig. 9 shows components of the processing system 114. The image acquired from the camera 112 is transmitted to a module 115, which is responsible for initial processing and extraction of characteristic points (i.e. pixels) in particular areas with a high gradient, corners and contours. The method of extraction of these image points is characterized in that its input data is an image or a sequence of images, while its output data have a form of an array of values of selected features. The created array of features is further analyzed in a module 116 using a computer model of the seed, provided from a module 117. The analysis results in providing the orientation of the seed 1 and the length of the seed. On their basis, signals are generated for the controller 170.

The advantage of such solution is that it allows introducing changes to the module 116 in an easy way (in particular, changing the species of the analyzed seed), by changing the computer model of the seed in the module 117, without the need to introduce significant changes to elements 112, 115 and the controller 170 related to the method of acquisition and processing of the image.

The gripper 132 of the gripping unit has a form of an automatic regulation system with an operating element comprising at least two electromagnetically controlled arms that are terminated with a holder for embracing a part of the seed 1. In its mechanical side, the gripper 132 is a device providing a secure grip, by embracing and clamping of the arm on the surface of the seed 1. The other side of the arm undergoes interaction by means of electromagnetic force, thereby the clamping force can be adjusted to a particular level. Due to the electromagnetic control, the controlling force is under permanent control and its characteristic is particularly profiled depending on the size, shape and specific features of the seed 1.

There may be more grippers, allowing simultaneous operation of a plurality of system components. For example, the gripping unit may have six grippers 132, allowing, for example, simultaneous operation of the gripping unit, the scarifier 142, the mummification changes detector 150 and the sorter 162.

Figs. 10a-10b show two embodiments of the seed positioner. The seed positioner consists of a sliding positioning element 136a, 136b positioned at a particular distance from the gripper 132. The positioner 135, on the basis of information from the length and orientation detector 110, controls the positioning element 136a, 136b. When the distal portion 1a of the seed 1 rests on the positioning element, then the gripper clamps the seed and sequentially transports the seed to the region of operation of the scarifier. The scarifier cuts off the distal portion at the predetermined distance from the end of the seed 1. It should be noted that the gripper 132 holds the seed 1 at a certain distance from the distal portion 1a (more precisely, from the plane of scarification). The gripper 132 and the positioner 135 must be adapted to the structure of the scarifier 142, to prevent the collision of these components.

In the first embodiment, a cam 136a is used. The cam 136a has a specific shape that allows to position the distal portion 1a at the desired distance, measured along the axis of the seed 1. The axis is positioned so as to unambiguously determine the distance of the cutoff. The shape of the curvature is designed so as to cover the desired range of positions of the seed for the process of scarification with particular parameters.

In the second embodiment, a sliding positioning element 136b is used. It is controlled with the sliding mechanism and positioned at the desired distance, allowing to protrude the distal part 1a from the gripper 132.

In each case, the configuration of the positioner 135 is unambiguously defined with respect to the scarifier 142.

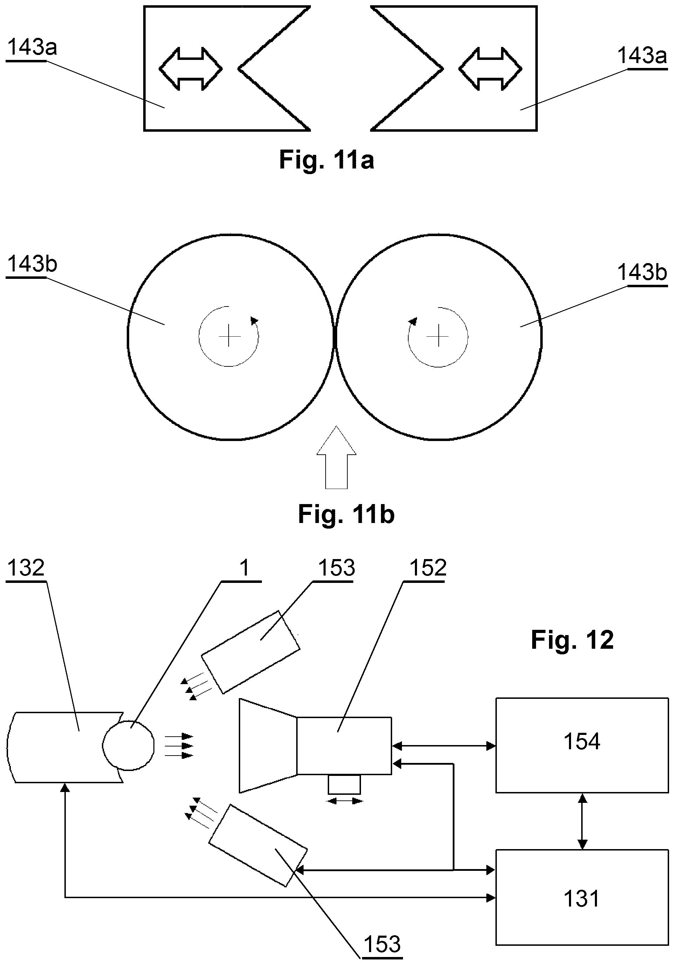

Figs. 11a-11b show two embodiments of blades of the scarifier 142. The scarifier 142 has blades which allow precise scarification.

In the embodiment shown in Fig. 11a, the process of scarification is conducted by two controllable blades 143a operating in a counter-wise manner, having specially shaped cutting edges. Fig. 11a shows an example of a trajectory of the cutting edges of the blades 143a. These cutting edges are located opposite to each other and move linearly. Preferably, the shapes of the cutting edges provide a predetermined distribution of a cutting force on the surface of the cross section of the seed. Moreover, the speed of the sliding motion of each part of the scarifier 142 is uniform, which guarantees simultaneous cutting of the seed 1 from its both sides. The speed profile is controllable and is realized according to a predetermined cutting profile. An automatic control system controls the sliding speed of the arms in order to achieve a desired sliding speed.

In the embodiment shown in Fig. 11b, the process of scarification is realized by two rotary blades 143b, having axes of rotation parallel to each other and directions of rotation opposite to each other. The cutting blades 143b are located in one plane, which guarantees a flat cutting surface of the seed. The speed of rotation of the blades 143b is controllable and adjusted so as to be optimal or close to optimal with respect to the relative linear sliding of the seed 1 and of the blades 143b. It is also adjusted to be non-destructive to the biological material and not to increase the system operation time. After the scarification is completed, the cross section of the seed is present in the view of a camera 152 of the mummification changes detector 150, at the scarifier 142 or after displacement of the gripper 132. Preferably, the opposite edges of the scarifier blades 143a, 143b balance the multidirectional forces during cutting, therefore they reduce the clamping force of the gripping unit that has to be applied.

Fig. 12 shows the mummification changes detector 150. It is a vision system with automatic classifier that allows sorting seeds on a basis of various features, depending on the type of the features of the image of the seed cross section, that have been detected and considered during classification. It consists of a area scan video camera 152 (digital or analog) acquiring a monochrome or a color image in a visual spectrum or in an extended spectrum. The mummification changes detector 150 may be equipped with at least one illuminator 153, i.e. a source light, operating continuously or intermittently in synchrony with the camera. The signal from the camera 152, equipped with lens and an analog or digital transmission interface, is sent to the processing system 154. The optical system of the lens allows to obtain a reliable representation of the cross section of the seed and the elements of automation in which the seed is located. The optical system of the lens may be equipped with adjustable elements allowing adjustment or setting of brightness and focus of the image. In addition, the system comprising the camera 152 with the lens, by means of a mechanical mounting, allows changing a distance of the lens from the cross section of the acorn placed in the gripper 132. This action is done by an operator during installation and calibration of the device.

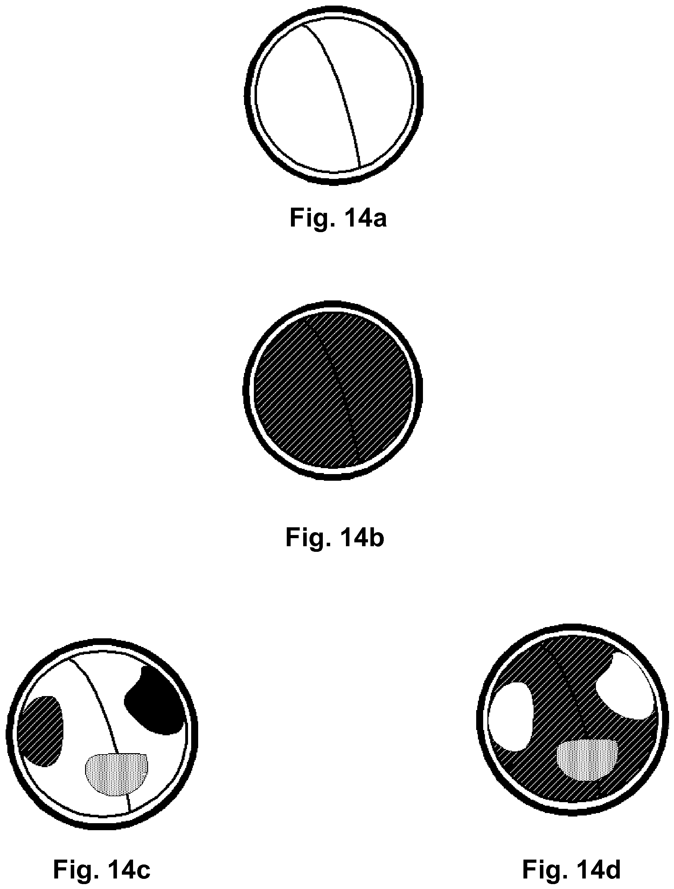

One of the factors which negatively influence the viability of the seeds are mummification changes. They become apparent as dark areas in the cotyledons tissue of the acorn, thereby they are invisible to the human eye when the seed is intact (for example by the scarification process). During the scarification process, after the distal portion 1a is cut off, the cross section of cotyledons becomes visible, wherein the changes are distinguishable by darker areas of different intensity and topography, as depicted for example in Fig. 14b-14d.

The processing system 154 consists of an acquisition interface for the camera 152 vision signal and an analog-digital converter, in case the signal is transmitted in an analog form. Further image processing with contextual (i.e. using local pixels surrounding constituting an image acquired from the camera) and non-contextual (i.e. using given pixels determined by a Region of Interest (ROI) region) methods with the use of digital configurable or programmable computing elements, is realized on sampled and digitalized vision signal consisting of lines according to the organization of the camera 152 vision sensor, or its fragment. Acquisition of the image from the camera 152 may be conducted in a free mode or may be triggered by a system of additional sensors (for example by means of the controller) informing about the presence of the seed 1 mounted in the gripper 132. The result of the operation of the processing system 154 of the signal from the area scan camera 152, is information indicating the viability of the seed ("healthy"/"spoiled") or an error code that indicated that the viability cannot be determined. The error code is a useful information, in particular for a correct operation of the controller 151 and the system. Therefore, the need for human intervention during a continuous operation of the system is reduced only to critical errors or faults. Information about errors, critical errors and faults may be stored in the memory of the controller 170 and/or memory of processing system 154.

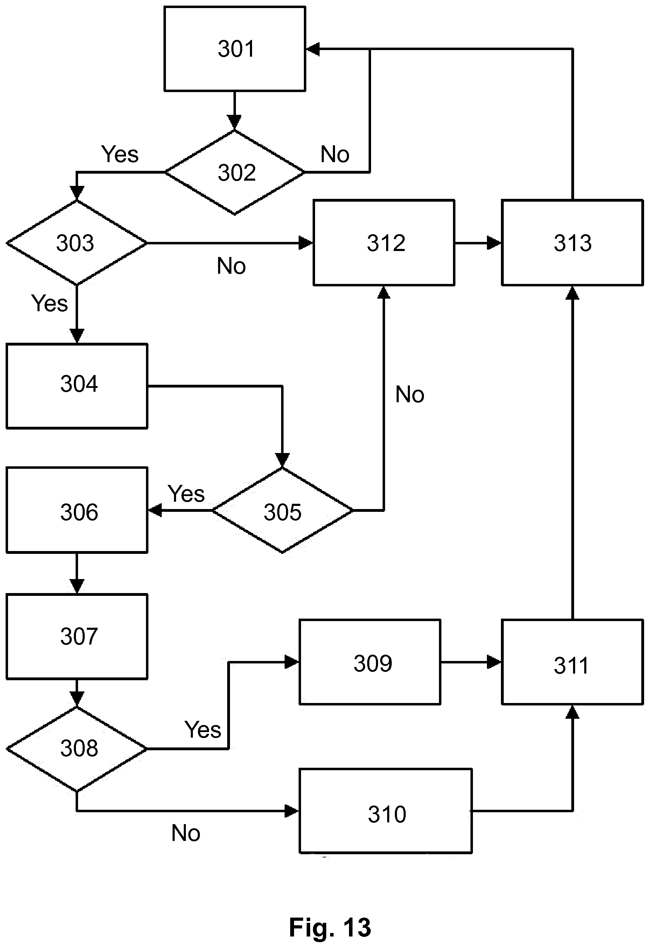

Fig. 13 shows a schematic of operation of the mummification changes detector 150. An integral part of the mummification changes detector 150 is a seeds classification subsystem which classifies the seeds according to their viability, based on the estimation of the mummification changes or other changes captured by the camera. Separation of the seeds to healthy and spoiled seeds on the basis of the cross-sectional images may be performed in multiple variants or multiple stages, with use of different representations of the cross section for determination of a separation feature, wherein the separation feature may have a form of a single value assigned to the cross section of seed image or a range of values determined for the whole cross section of the seed or its particular areas. The method of operation of the mummification changes detector 150 comprises the following steps. An image is acquired in step 301 from the camera and it is checked in step 302 if the scarification is completed. If not, an image is acquired in step 301 from the camera once again. If yes, it is checked in step 303 if the seed is present. If not - a message K_ERROR is output in step 312 and a message K_REMOVE is output in step 313. If the seed is present, the cross-sectional region of the seed is determined in step 304, and then it is checked in step 305 if the region has been determined. If not, the message K_ERROR is output in step 312 and the message K_REMOVE is output in step 313. If the cross section has been determined, the initial processing of cross-sectional features is performed in step 306 and the seed is classified in step 307. Next, it is checked in step 308 if the viability has been determined. If yes, then a message K_HEALTHY or K_SPOILED is output in step 309. If not, then a message K_UNRECOGNIZED is output in step 310. Independently on the message output after step 308, the recognition data is stored in step 311 and the message K_REMOVE is output in step 313.

The mummification changes detector 150 may also utilize the system as shown in form of modules realized in the processing system functioning in an analogous way to the one shown in Fig. 9.

The classification of the seed, for example as healthy and spoiled, may be realized by performing the following actions. At first, the seed is detected, i.e. it is determined whether the seed is present in the gripper 132 in the camera 152 view, by means of processing and analyzing of images or by means of application of the photo-optical presence sensor or another method, for example acquired from the controller 131 which controls the gripper 132.

Next, the region of the seed 1 is determined, by means of the vision method with use of the camera 152 through the application of techniques for processing and analyzing of images, based on separation of pixels from the image, which correspond to the image of the cross section of cotyledon of the seed, wherein this region may include a shell of the seed.

After the region of the seed is determined, initial processing and analysis is performed, involving application of techniques of machine vision and image analysis, in order to separate features which form the basis for classification (in particular the histograms, which are one of the indicators of the mummification changes), wherein the features may include brightness, color, hue of the region of cotyledon determined for the whole cross section of the seed or fragments of the cross section. In case of non-uniformities in a description of the cross section, the location and shape of regions distinguishing in the region of the seed may be considered as a feature.

Preferably, the features used for the assessment of the analyzed image and the classification criteria of the seeds may be altered by means of automatic learning, without the need to involve the personnel operating the system.

Figs. 14a-14d show examples of seeds with various degrees of mummification changes. Classification may be conducted in accordance with the following criteria. The seeds with uniformly bright cross section of cotyledons (shown in Fig. 14a) are treated as healthy seeds (viable). In turn, the seeds with uniformly dark cross section (Fig. 14b) are treated as spoiled seeds. The seeds with a non-uniform cross-sectional region are classified on the basis of the features determined for the particular cross section and a set of parameters selected by operators or determined by machine learning on the basis of a set of reference cross sections with corresponding viability information, that is "healthy"/"spoiled". In particular cases, wherein the result of the classification is ambiguous (for example, as shown in Figs. 14c and 14d), the result of classification is marked with an "unrecognized" code and the seed is placed in a separate container, other than the containers for the "healthy" and "spoiled" seeds.

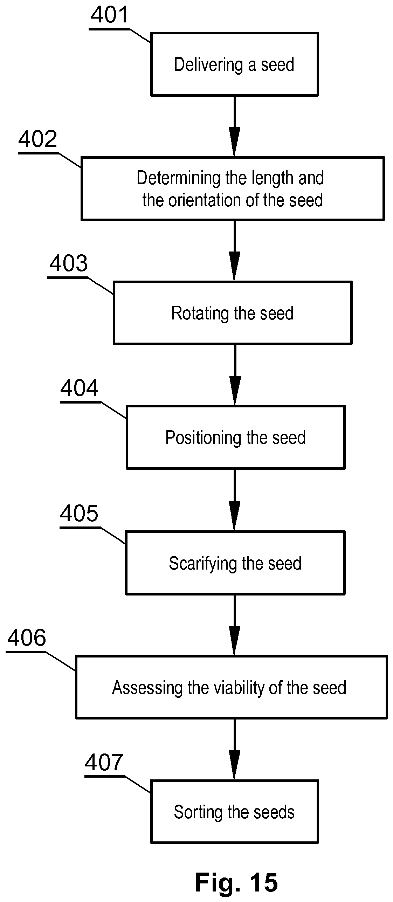

Fig. 15 shows steps of the method according to the invention. First, in step 401, the seeds 1 are delivered to the feeder 103 from the input container 102. The seeds do not have to be pre-arranged in any way. The width of the feeder 103 in its inner part, wherein the seed 1 moves, has dimensions close to the seed dimensions. Next, a single seed 1 is fed to the region of operation of the length and orientation detector 110. The seed 1 is analyzed, by means of the length and orientation detector 110, which involves measurement of seed features to determine its length and orientation, to obtain the length of the seed in step 402. Information acquired from the length and orientation detector 110 forms input data for further elements of the system. In the next step 403, the seed is oriented by the rotator 120 and the seed is positioned in step 404 to define the place of scarification (cut off), and moved to the gripping unit. The position of the seed is set, by means of the gripping unit, based on information received from the length and orientation detector 110, so that its distal portion 1a protrudes to a certain distance from the gripper 132. The seed 1 is then held by the gripper 132. The extent of the protrusion of the seed may be set a-priori during configuration of the system. Next, the captured seed 1 is fed to the scarifier 142 and it is scarified in step 405, i.e. the distal portion is cut off, by means of the scarifier, at the predetermined distance from the distal end of the seed.

Then, the seed 1 is delivered to the mummification changes detector 150. Next, there state of changes of the seed are assessed or detected and the state of the probable viability of the seed is determined in step 406. This information is used in the following step, in the sorter, by which the seed is placed into a particular container in step 407, depending on the result of the classification.

The classifier of the system makes a decision based on the experience gained in the past in the automatic learning process, performed on samples of seeds having various forms of degeneration changes, for which the results of the seedlings growth, sown from seeds, were known. The knowledge gained automatically by the classifier illustrates the real conditions of operation of the scarifying system, characteristic features of seeds and final results in form of characteristic features of the seedlings or information about lack of germination. The modular structure of the classifier also allows to configure and apply parameters preset by the system operator during the operation of the system, its initialization or preset during the automatic or manual calibration. The sorting unit comprises three containers: 163, 164, 165 and a sorter 162 (with a corresponding controller 161), which delivers the seed 1 to the corresponding container 163, 164, 165 on the basis of information received from the mummification changes detector 150. The container 163 is designated for healthy seeds, which are to be sown. The container 164 is designated for seeds that are damaged to an extent that disqualifies them for sowing. The container 165 is designated for seeds having a questionable quality, to be classified by an expert or to be used for other purposes.

## Claims

1. A system for automatic scarification and assessment of viability of oak seeds, **characterized in that** it comprises an input container (102) for the oak seeds, connected to an input of an oak seed transportation path that comprises the following elements arranged in the following sequence: a feeder (103), a length and orientation detector (110), a rotator (120), a positioner (135), a gripper (132), a scarifier (142) for scarifying the oak seeds, a mummification changes detector (150) and a sorter (162) at the output of the path and coupled with oak seed containers (163, 164, 165).

2. The system according to claim 1, **characterized in that** the elements of the oak seed transportation path are configured to operate sequentially or simultaneously with respect to each other.

3. The system according to claim 1, **characterized in that** the positioner (135) comprises a controlled rotation mechanism and: a cam (136a) whose rotation sets the position of the oak seed, or a controlled sliding positioning element (136b).

4. The system according to claim 1, **characterized in that** the length and orientation detector (110) comprises a vision camera (112) and a source of light (113), operating continuously or in synchrony with the camera (112).

5. The system according to claim 1, **characterized in that** the rotator (120) comprises an inlet channel (122), a rotation mechanism (125), a partition (126) and outlet channels (123, 124).

6. The system according to claim 1, **characterized in that** the gripper (132) has a form of an automatic control system with an operating element in form of at least two controlled, preferably electromagnetically, arms terminated at one side with a holder configured to embrace a part of the oak seed (1).

7. The system according to claim 1, **characterized in that** the scarifier (142) comprises two sliding blades (143a) or rotary blades (143b).

8. The system according to claim 1, **characterized in that** the mummification changes detector (150) comprises an area scan video camera (152), a source of light (153), configured to operate continuously or in synchrony with the camera (152) and a processing system (154) configured to perform a preset or an adaptive algorithm for determining the degree of viability, comprising an interface for acquisition of a vision signal of the camera (152) adapted to output information determining the viability of the oak seed, based on the received signal.

9. The system according to claim 8, **characterized in that** it comprises a plurality of grippers to allow simultaneous operation of the scarifier (142), the mummification changes detector (150) and the sorter (162).

10. A method for automatic scarification and assessment of viability of oak seeds, **characterized in that** it comprises the steps of:
- delivering (401) the oak seeds by a feeder, and for each delivered oak seed:
- measuring (402) a length DL and determining an orientation of the oak seed to be specified as CORRECT or INCORRECT, by means of a length and orientation detector (110);
- orienting (403) the oak seed by means of a rotator (120);
- positioning (404) the oak seed and transporting the oak seed by a gripper (132) to a scarifier (142);
- scarifying (405) the oak seed by the scarifier (142);
- assessing (406) the viability of the scarified oak seed by a mummification changes detector (150);
- sorting (407) the oak seeds by a sorter (162), and providing the oak seeds from the transporter to oak seed containers (163, 164, 165).

11. The method according to claim 10, **characterized in that** during the measurement (402) of the length and detection of the orientation of the oak seed, the length DL of the oak seed is measured and its orientation is determined as CORRECT or INCORRECT.

12. The method according to claim 10, **characterized in that** the length and the orientation is determined by means of at least one of the following methods:
- when determining (402) the length and the orientation of the oak seed, whose length is larger than its diameter, the length DL of the oak seed is determined by indicating on an image two most distant points PZ, PD that belong to the image of the oak seed, along the axis of symmetry of the oak seed, wherein the image is provided by a camera;
- when determining (402) the length and orientation of the oak seed, whose diameter is larger or close to its length, the length DL is assumed to be the distance of points PZ, PD that belong to the contour of the oak seed, which form a line most close to the axis of symmetry of the oak seed (1) and which are most distant to each other.

13. The method according to claim 10, **characterized in that** during the assessment (406) of mummification changes of the oak seed, the following steps are performed:
- acquiring (301) the image from the camera;
- checking (302) whether the scarification has been completed;
- checking (303) whether the oak seed is present;
- determining (304) the area of the cross section of the oak seed;
- initial processing (306) of features;
- classifying (307) the oak seed;
- checking (308) if viability of the oak seed has been determined and if yes, outputting (309) information about the state of the oak seed, and if not, outputting (310) information about the oak seed being not recognized.

14. The method according to claim 12, **characterized in that** the result of the measurement of the length of each oak seed is used for determination of an appropriate plane of scarification for that oak seed, and the length DL determined for that oak seed is used for positioning that oak seed before the step of scarification (405).

15. The method according to claim 13, **characterized in that** during the classification (307) of the scarified oak seeds, the oak seeds are divided into at least two types: healthy oak seeds to be placed in the container (163) for the healthy oak seeds, and spoiled oak seeds to be placed in the container (164) for spoiled oak seeds (164); and preferably oak seeds of a questionable quality to be placed in the container (165) for unrecognized oak seeds.

## Patentansprüche

1. System zur automatischen Ritzung und Bewertung der Vitalität von Eichensamen, **dadurch gekennzeichnet, dass** es einen Eingabebehälter (102) für die Eichensamen umfasst, der mit einer Eingabe eines Eichensamentransportweges verbunden ist, welches die folgenden Elemente umfasst, die in der folgenden Reihenfolge angeordnet sind:
einen Zuführer (103), einen Längen- und Ausrichtungsdetektor (110), einen Rotator (120), einen Positionierer (135), einen Greifer (132), einen Ritzer (142) zum Ritzen der Eichensamen, einen Mumifizierungsveränderungsdetektor (150) und einen Sortierer (162) an der Ausgabe des Wegs, der mit Eichensamenbehältem (163, 164, 165) verbunden ist.

2. System nach Anspruch 1, **dadurch gekennzeichnet, dass** die Elemente des Eichensamen-Transportweges konfiguriert sind, um aufeinanderfolgend oder gleichzeitig bezüglich einander betrieben zu werden.

3. System nach Anspruch 1, **dadurch gekennzeichnet, dass** der Positionierer (135) einen kontrollierten Rotationsmechanismus und: einen Nocken (136a), dessen Drehung die Position des Eichensamens einstellt, oder ein kontrolliertes Gleitpositionierungselement (136b) umfasst.

4. System nach Anspruch 1, **dadurch gekennzeichnet dass** der Längen- und Ausrichtungsdetektor (110) eine Visionskamera (112) und eine Lichtquelle (113) umfasst, die kontinuierlich oder synchron mit der Kamera (112) betrieben wird.

5. System nach Anspruch 1, **dadurch gekennzeichnet dass** der Rotator (120) einen Einlasskanal (122), einen Rotationsmechanismus (125), eine Trennwand (126) und Auslasskanäle (123, 124) umfasst.

6. System nach Anspruch 1, **dadurch gekennzeichnet**, das der Greifer (132) eine Form eines automatischen Kontrollsystems mit einem Betriebselement in Form mindestens zweier, vorzugsweise elektromagnetisch, kontrollierter Arme aufweist, die auf einer Seite in einem Halter enden, der konfiguriert ist, einen Teil des Eichensamens (1) zu umfassen.

7. System nach Anspruch 1, **dadurch gekennzeichnet, dass** der Ritzer (142) zwei Gleitklingen (143a) oder Drehklingen (143b) umfasst.

8. System nach Anspruch 1, **dadurch gekennzeichnet, dass** der Mumifizierungsveränderungsdetektor (150) eine Bereichsscanvideokamera (152), eine Lichtquelle (153), die konfiguriert ist, kontinuierlich oder synchron mit der Kamera (152) betrieben zu werden, und ein Verarbeitungssystem (154) umfasst, das konfiguriert ist, einen voreingestellten oder adaptiven Algorithmus zum Ermitteln des Vitalitätsgrads durchzuführen, umfassend eine Schnittstelle zum Erwerben eines Visionssignals der Kamera (152), die angepasst ist, um Informationen auszugeben, die auf der Basis des empfangenen Signals die Vitalität des Eichensamens bestimmen.

9. System nach Anspruch 8, **dadurch gekennzeichnet, dass** es eine Vielzahl Greifer umfasst, um den gleichzeitigen Betrieb des Ritzers (142), des Mumifizierungsveränderungsdetektors (150) und des Sortierers (162) umfasst.

10. Verfahren zum automatischen Ritzen und Bewerten der Vitalität von Eichensamen, **dadurch gekennzeichnet, dass** es die folgenden Schritte umfasst:
- Zuführen (401) der Eichensamen durch einen Zuführer, und für jeden zugeführten Eichensamen:
- Messen (402) einer Länge DL und Ermitteln einer Ausrichtung des Eichensamens, die als KORREKT oder NICHT KORREKT zu spezifizieren ist, mittels eines Längen- und Ausrichtungsdetektors (110);
- Ausrichten (403) des Eichensamens mittels eines Rotators (120);
- Positionieren (404) des Eichensamens und Transportieren des Eichensamens durch einen Greifer (132) an einen Ritzer (142);
- Ritzen (405) des Eichensamens durch den Ritzer (142);
- Bewerten (406) der Vitalität des geritzten Eichensamens durch einen Mumifizierungsveränderungsdetektors (150);
- Sortieren (407) der Eichensamen durch einen Sortierer (162) und Bereitstellen der Eichensamen vom Transportierer zu Eichensamenbehältern (163, 164, 165).

11. Verfahren nach Anspruch 10, **dadurch gekennzeichnet, dass** während der Messung (402) der Länge und Erfassung der Ausrichtung des Eichensamens die Länge DL des Eichensamens gemessen und seine Ausrichtung als KORREKT oder NICHT KORREKT ermittelt wird.

12. Verfahren nach Anspruch 10, **dadurch gekennzeichnet, dass** die Länge und Ausrichtung mittels mindestens eines der folgenden Verfahren ermittelt wird:
- beim Ermitteln (402) der Länge und der Ausrichtung des Eichensamens, dessen Länge größer als sein Durchmesser ist, wird die Länge DL des Eichensamens durch Anzeigen auf einem Bild von zwei entferntesten Punkten PZ, PD, die zu dem Bild des Eichensamens gehören, entlang der Symmetrieachse des Eichensamens ermittelt, wobei das Bild von einer Kamera bereitgestellt wird;
- beim Ermitteln (402) der Länge und Ausrichtung des Eichensamens, dessen Durchmesser größer oder nahe seiner Länge ist, wird die Länge DL als der Abstand der Punkte PZ, PD angenommen, die zur Kontur des Eichensamens gehören, welche eine Linie bildet, die der Symmetrieachse des Eichensamens (1) am nächsten ist, und die am weitesten voneinander entfernt sind.

13. Verfahren nach Anspruch 10, **dadurch gekennzeichnet, dass** während der Bewertung (406) der Mumifizierungsveränderungen des Eichensamens, die folgenden Schritte durchgeführt werden:
Erwerben (301) des Bilds von der Kamera;
Kontrollieren (302), ob das Ritzen abgeschlossen wurde;
Kontrollieren (303), ob der Eichensamen vorhanden ist;
Ermitteln (304) der Querschnittfläche des Eichensamens;
erste Verarbeitung (306) von Merkmalen;
Klassifizieren (307) des Eichensamens;
Kontrollieren (308), ob die Vitalität des Eichensamens ermittelt wurde und falls ja, Ausgeben (309) von Informationen über den Zustand des Eichensamens, und falls nicht, Ausgeben (310) von Informationen darüber, dass der Eichensamen nicht erkannt wurde.

14. Verfahren nach Anspruch 12, **dadurch gekennzeichnet, dass** das Ergebnis der Messung der Länge jedes Eichensamens zur Ermittlung einer geeigneten Ritzebene für diesen Eichensamen verwendet wird, und die für diesen Eichensamen ermittelte Länge DL zur Positionierung dieses Eichensamens vor dem Schritt des Ritzens (405) verwendet wird.

15. Verfahren nach Anspruch 13, **dadurch gekennzeichnet, dass** während der Klassifizierung (307) der geritzten Eichensamen die Eichensamen in mindestens zwei Typen unterteilt werden: gesunde Eichensamen, die in den Behälter (163) für gesunde Eichensamen zu platzieren sind, und verdorbene Eichensamen, die in den Behälter (164) für verdorbene Eichensamen (164) zu platzieren sind; und vorzugsweise Eichensamen fragwürdiger Qualität, die in den Behälter (165) für nicht erkannte Eichensamen zu platzieren sind.

## Revendications

1. Système de scarification et d'évaluation automatiques de la viabilité de semences de chêne, **caractérisé en ce qu'**il comprend un récipient d'entrée (102) pour les semences de chêne, raccordé à une entrée d'un chemin de transport de semences de chêne comprenant les éléments suivants agencés dans la séquence suivante : un distributeur (103), un détecteur de longueur et d'orientation (110), un rotateur (120), un positionneur (135), une pince (132), un scarificateur (142) pour scarifier les semences de chêne, un détecteur de changements de momification (150), et une trieuse (162) située à la sortie du chemin, et couplée à des réservoirs de semences de chêne (163, 164, 165).

2. Système selon la revendication 1, **caractérisé en ce que** les éléments du chemin de transport des semences de chêne sont configurés pour fonctionner en séquence ou simultanément l'un par rapport à l'autre.

3. Système selon la revendication 1, **caractérisé en ce que** le positionneur (135) comprend un mécanisme à rotation contrôlée, et une came (136a) dont la rotation détermine la position de la semence de chêne, ou un élément de positionnement à coulissement contrôlé (136b).

4. Système selon la revendication 1, **caractérisé en ce que** la longueur et le détecteur d'orientation (110) comprend une caméra de vision (112) et une source de lumière (113), fonctionnant en continu ou en synchronisation avec la caméra (112).

5. Système selon la revendication 1, **caractérisé en ce que** le rotateur (120) comprend un conduit d'entrée (122), un mécanisme de rotation (125), une cloison (126), et des conduits de sortie (123, 124).

6. Système selon la revendication 1, **caractérisé en ce que** la pince (132) se présente comme un système à commande automatique avec un organe de commande sous forme d'au moins deux bras commandés, de préférence électro-magnétiquement, se terminant à un bout par un porte-semence configuré pour envelopper une partie de la semence de chêne (1).

7. Système selon la revendication 1, **caractérisé en ce que** le scarificateur (142) comprend deux lames coulissantes (143a) ou rotatives (143b).

8. Système selon la revendication 1, **caractérisé en ce que** le détecteur de changements de momification (150) comprend une vidéo-caméra à balayage de zone (152), une source de lumière (153), configurée pour fonctionner en continu ou en synchronisation avec la caméra (152), et un système de traitement (154), configuré pour l'exécution d'un algorithme prédéfini ou adaptatif pour la détermination du degré de viabilité, y compris une interface pour l'acquisition d'un signal de vision de la caméra (152) adapté pour sortir des informations déterminant la viabilité de la semence de chêne, sur la base du signal reçu.

9. Système selon la revendication 8, **caractérisé en ce qu'**il comprend une pluralité de pinces permettant le fonctionnement simultané du scarificateur (142), du détecteur de changements de momification (150), et de la trieuse (162).

10. Méthode de scarification et d'évaluation automatiques de la viabilité de semences de chêne, **caractérisé en ce qu'**il comprend les étapes suivantes :
- distribution (401) de semences de chêne par un distributeur, et, pour chaque semence de chêne distribuée :
- mesure (402) d'une longueur DL et détermination d'une orientation de la semence de chêne devant être spécifiée comme étant JUSTE ou ERRONÉE par le biais d'un détecteur de longueur et d'orientation (110) ;
- orientation (403) de la semence de chêne à l'aide d'un rotateur (120) : ;
- positionnement (404) de la semence de chêne, et transport de la semence de chêne par une pince (132) à un scarificateur (142) ;
- scarification (405) de la semence de chêne par le scarificateur (142) ;
- évaluation (406) de la viabilité de la semence de chêne scarifiée par un détecteur de changements de momification (150) ;
- tri (407) des semences de chêne par une trieuse (162), et distribution des semences de chêne du transporteur à des récipients de semences de chêne (163, 164, 165).

11. Méthode selon la revendication 10, **caractérisée en ce qu'**au cours de la mesure (402) de la longueur et de la détection de l'orientation de la semence de chêne, la longueur DL de la semence de chêne est mesurée, et son orientation est déterminée comme étant JUSTE ou ERRONÉE.

12. Méthode selon la revendication 10, **caractérisée en ce que** la longueur et l'orientation sont déterminées à l'aide d'au moins une des méthodes suivantes :
- lors de la détermination (402) de la longueur et de l'orientation de la semence de chêne, dont la longueur est supérieure à son diamètre, la longueur DL de la semence de chêne est déterminée par l'indication, sur une image, de deux points les plus éloignés PZ, PD, appartenant à l'image de la semence de chêne, le long de l'axe de symétrie de la semence de chêne, l'image étant fournie par une caméra,
- lors de la détermination (402) de la longueur et de l'orientation de la semence de chêne, dont le diamètre est plus important ou proche de sa longueur, la longueur DL étant supposée être la distance de points PZ, PD appartenant au profil de la semence de chêne, formant une ligne la plus proche de l'axe de symétrie de la semence de chêne (1), et étant les plus distants l'un de l'autre.

13. Méthode selon la revendication 10, **caractérisée en ce que**, au cours de l'évaluation (406) des changements de momification de la semence de chêne, les étapes suivantes sont effectuées :
- acquérir (301) l'image de la caméra ;
- vérifier (302) si l'on a achevé la scarification ;
- vérifier (303) la présence de la semence de chêne ;
- déterminer (304) la superficie de la coupe transversale de la semence de chêne ;
- procéder au traitement initial (306) des caractéristiques ;
- classifier (307) la semence de chêne ;
- vérifier (308) si la viabilité de la semence de chêne a été déterminée ; si oui, sortir (309) des informations sur l'état de semence de chêne ; si non, sortir (310) des informations sur le fait que la semence de chêne n'est pas reconnue.

14. Méthode selon la revendication 12, **caractérisée en ce que** le résultat de la mesure de la longueur de chaque semence de chêne est utilisée pour la détermination d'un plan approprié de scarification pour la semence de chêne, et **en ce que** la longueur DL, déterminée pour cette semence de chêne, est utilisée pour le positionnement de cette semence de chêne préalablement à l'étape de scarification (405).

15. Méthode selon la revendication 13, **caractérisée en ce qu'**au cours de la classification (307) des semences de chêne scarifiées, les semences de chêne sont divisées en au moins deux types : des semences de chêne saines à placer dans le récipient (163) pour semences de chêne saines, et des semences de chêne gâtées, à placer dans le récipient (164) pour semences de chêne gâtées (164) ; et, de préférence, des semences de chêne de qualité douteuse, à placer dans le récipient (165) pour semences de chêne non reconnues.
